(19)

**Europäisches Patentamt**
**European Patent Office**
**Office européen des brevets**

(11) **EP 4 262 105 A1**

(12) **EUROPEAN PATENT APPLICATION**

(43) Date of publication:
**18.10.2023 Bulletin 2023/42**

(21) Application number: **23164706.6**

(22) Date of filing: **28.03.2023**

(51) International Patent Classification (IPC):
**H04B 7/06** (2006.01)          **G06N 3/08** (2023.01)
**H04L 5/00** (2006.01)

(52) Cooperative Patent Classification (CPC):
**H04B 7/0626; G06N 3/08; H04L 5/0048;**
H04B 17/373; H04W 72/21

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.04.2022   US 202263331395 P
28.09.2022   US 202263410944 P
13.01.2023   US 202318154751**

(71) Applicant: **Samsung Electronics Co., Ltd.
Suwon-si, Gyeonggi-do 16677 (KR)**

(72) Inventors:
• **SHAHMOHAMMADIAN, Hoda
San Jose, CA, 95134 (US)**
• **BAE, Jung Hyun
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **REPORTING OF CHANNEL STATE INFORMATION**

(57)    Systems and methods for reporting channel state information. In some embodiments, the method includes: receiving, by a UE, a first Channel State Information Reference Signal ,CSI-RS; receiving, by the UE, a second CSI-RS; calculating, by the UE, a first predicted channel state information based on the first CSI-RS and the second CSI-RS; and transmitting, to a network node ,gNB, a first precoding matrix corresponding to the first predicted channel state information.

FIG. 7B

- Receive a first Channel State Information Reference Signal (CSI-RS) — 730
- Receive a second CSI-RS — 732
- Calculate a first predicted channel state information based on the first CSI-RS and the second CSI-RS — 734
- Report a capability to predict a channel state information — 736
- Transmit, to a network node (gNB), a first precoding matrix corresponding to the first predicted channel state information — 738
- Calculate a second predicted channel state information for a second point in time different from the first point in time, based on the first CSI-RS and the second CSI-RS — 740
- Transmit, to the network node, a second precoding matrix corresponding to the second predicted channel state information — 742
- Receive a set of candidate Doppler domain basis vectors — 744
- Transmit a set of identifiers identifying a set of Q Doppler domain basis vectors, each basis vector of the set of Q Doppler domain basis vectors being a respective one of the set of candidate Doppler domain basis vectors — 746

EP 4 262 105 A1

**Description**

TECHNICAL FIELD

The disclosure generally relates to wireless communications. More particularly, the subject matter disclosed herein relates to improvements to reporting of channel state information.

SUMMARY

In a wireless communications system, channel state information (CSI) measurement and reporting rate may be defined based on the channel coherence time in order to fairly track the channel time variation. In a high or medium UE mobility scenario, however, Doppler spread implies a fast-fading channel and the coherence time becomes very small. In such scenarios, if CSI measurements are not sufficiently frequent with respect to the channel variation rate, performance may degrade due to CSI aging.

To solve this problem, and to be able to track CSI variations in such scenarios and prevent CSI aging, the network may trigger more frequent CSI measurements. One issue with the above approach is higher resource overhead, UE complexity and power consumption. To overcome these issues, systems and methods are described herein for predicting CSI. The above approaches improve on previous methods because it may provide acceptable CSI without incurring unacceptable complexity and power consumption.

According to some embodiments, there is provided a method, including: receiving, by a UE, a first Channel State Information Reference Signal (CSI-RS); receiving, by the UE, a second CSI-RS; calculating, by the UE, a first predicted channel state information based on the first CSI-RS and the second CSI-RS; and transmitting, to a network node (gNB), a first precoding matrix corresponding to the first predicted channel state information.

In some embodiments, the method further includes reporting, by the UE, a capability to predict a channel state information.

In some embodiments, the reporting includes reporting a greatest time in the future at which the UE is able to predict the channel state information.

In some embodiments, the first predicted channel state information is predicted for a first point in time, the first point in time being a set time interval after the transmitting of a legacy channel state information.

In some embodiments, the first predicted channel state information is predicted for a first point in time, the first point in time being a set time interval after a time of receipt, by the UE, of a most recent CSI-RS.

In some embodiments, the transmitting of the first precoding matrix includes transmitting an array of coefficients, the first precoding matrix being a portion of an array product of the array of coefficients with a plurality of bases.

In some embodiments: the first predicted channel state information is predicted for a first point in time; and the method further includes: calculating, by the UE, a second predicted channel state information for a second point in time, different from the first point in time, based on the first CSI-RS and the second CSI-RS, and transmitting, to the network node, a second precoding matrix corresponding to the second predicted channel state information, the second precoding matrix and the first precoding matrix being transmitted in one CSI report.

In some embodiments: the second precoding matrix is a portion of the array product of the array of coefficients with the plurality of bases; and the plurality of bases includes a single set of Doppler domain bases commonly selected for all spatial domain bases and for all frequency domain bases per layer.

In some embodiments: the set of Doppler domain bases is a set of Q Doppler domain bases; and the method further includes receiving a radio resource control (RRC) transmission, the RRC transmission specifying Q.

In some embodiments, the method further includes: receiving, by the UE, a plurality of candidate Doppler domain bases; and transmitting, by the UE, a set of identifiers identifying the set of Q Doppler domain bases, each basis of the set of Q Doppler domain bases being a respective one of the plurality of candidate Doppler domain bases.

According to some embodiments, there is provided a User Equipment (UE) including: one or more processors; and a memory storing instructions which, when executed by the one or more processors, cause performance of: receiving, by the UE, a first Channel State Information Reference Signal (CSI-RS); receiving, by the UE, a second CSI-RS; and calculating, by the UE, a first predicted channel state information based on the first CSI-RS and the second CSI-RS.

In some embodiments, the instructions, when executed by the one or more processors, further cause performance of reporting, by the UE, a capability to predict a channel state information.

In some embodiments, the reporting includes reporting a greatest time in the future at which the UE is able to predict the channel state information.

In some embodiments, the instructions, when executed by the one or more processors, further cause performance of transmitting, to a network node (gNB), a first precoding matrix corresponding to the first predicted channel state information.

In some embodiments, the first predicted channel state information is predicted for a first point in time, the first point in time being a set time interval after the transmitting of a legacy channel state information.

In some embodiments, the first predicted channel state information is predicted for a first point in time, the first point in time being a set time interval after a time of receipt, by the UE, of a most recent CSI-RS.

In some embodiments, the transmitting of the first precoding matrix includes transmitting an array of coefficients, the first precoding matrix being a portion of an array product of the array of coefficients with a plurality of bases.

In some embodiments: the first predicted channel state information is predicted for a first point in time; and the instructions, when executed by the one or more processors, further cause performance of: calculating, by the UE, a second predicted channel state information for a second point in time, different from the first point in time, based on the first CSI-RS and the second CSI-RS, and transmitting, to the network node, a second precoding matrix corresponding to the second predicted channel state information, the second precoding matrix and the first precoding matrix being transmitted in one CSI report.

In some embodiments: the second precoding matrix is a portion of the array product of the array of coefficients with the plurality of bases; and the plurality of bases includes a single set of Doppler domain bases commonly selected for all spatial domain bases and for all frequency domain bases per layer.

According to some embodiments, there is provided a User Equipment (UE) including: means for processing; and a memory storing instructions which, when executed by the means for processing, cause performance of: receiving, by the UE, a first Channel State Information Reference Signal (CSI-RS); receiving, by the UE, a second CSI-RS; and calculating, by the UE, a first predicted channel state information based on the first CSI-RS and the second CSI-RS.

BRIEF DESCRIPTION OF THE DRAWINGS

In the following section, the aspects of the subject matter disclosed herein will be described with reference to exemplary embodiments illustrated in the figures, in which:

FIG. 1A is a matrix diagram depicting concatenating of precoding vectors, according to some embodiments;
FIG. 1B is a drawing of a precoding matrix, according to some embodiments;
FIG. 2A is a matrix multiplication diagram, according to some embodiments;
FIG. 2B is a matrix multiplication diagram, according to some embodiments;
FIG. 3 is a table of parameter combinations, according to some embodiments;
FIG. 4A is a diagram of a compressed precoding matrix, according to some embodiments;
FIG. 4B is a diagram of a compressed precoding matrix, according to some embodiments;
FIG. 4C is a diagram of a compressed precoding matrix, according to some embodiments;
FIG. 5A is an illustration of a Doppler domain basis, according to some embodiments;
FIG. 5B is a diagram of a compressed precoding matrix, according to some embodiments;
FIG. 5C is a diagram of a compressed precoding matrix, according to some embodiments;
FIG. 6 is a graph of a spectrum, according to some embodiments;
FIG. 7A is a diagram of a portion of a wireless system, according to some embodiments;
FIG. 7B is a flow chart of a method, according to some embodiments;
FIG. 8 is a block diagram of an electronic device in a network environment, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

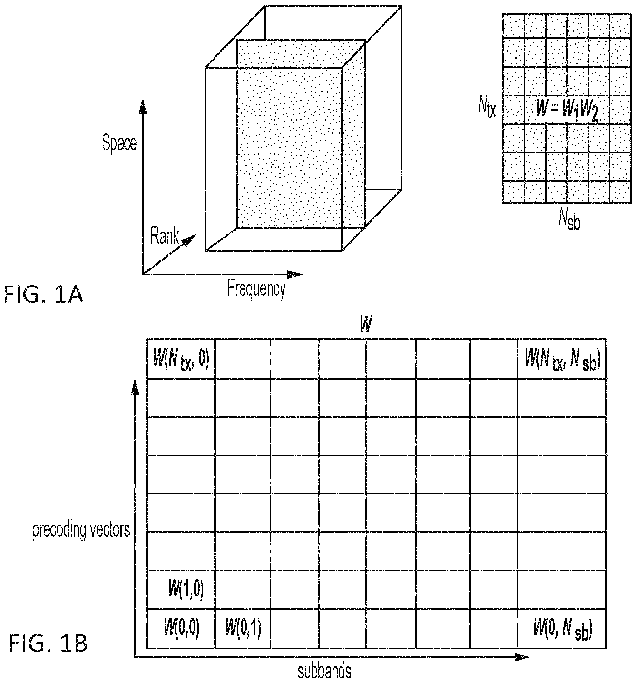

The Type II CSI feedback framework in Release 15 (Rel. 15) of the 5th generation (5G) standard promulgated by the 3rd Generation Partnership Project (3GPP) works based on a per subband CSI feedback to represent dominant singular vectors of the downlink (DL) channel. A space-frequency matrix can be obtained by concatenating the precoding vectors of different subbands that the User Equipment (UE) needs to report for a specified transmission layer as shown in FIG. 1A.

The precoding matrix for a specified transmission layer $W$ is an $N_{tx} \times N_{sb}$ matrix where $N_{sb}$ is number of subbands (SBs), and $N_{tx} = 2N_1N_2$ is the number of antenna ports at the network node (gNB). The $k$-th column of $W$ corresponds to the channel precoding vector for SB $k$, as illustrated in FIG. 1B.

This channel precoding matrix can be compressed in the spatial domain (SD) or in the frequency domain (FD) to reduce the feedback overhead. The Rel. 15 Type II CSI feedback only compresses $W$ in the spatial domain (i.e., across antenna ports) by performing linear combinations using $L$ discrete Fourier Transform (DFT) beams, and there is no compression in the frequency domain (i.e., across rows or SBs):

$$W = W_1 W_2,$$

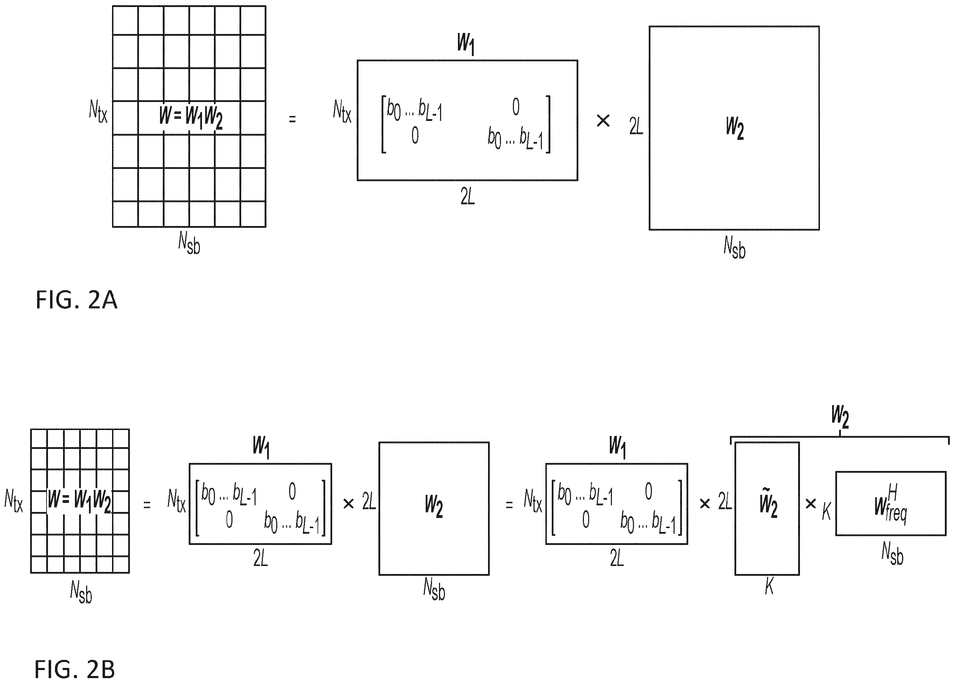

where $W_1$ consists of the wideband spatial two-dimensional discrete Fourier Transform (2D-DFT) beams with dimensions of $N_{tx} \times 2L$ (as shown in FIG. 2A):

$$W_1 = \begin{bmatrix} b_0 \dots b_{L-1} & 0 \\ 0 & b_0 \dots b_{L-1} \end{bmatrix},$$

and

$W_2$ is a vector of combination coefficients (to linearly combine columns of $W_1$ matrix) with dimension of $2L \times 1$. Since the columns of $W_1$ are orthogonal, $W_2$ is derived as:

$$W_2 = inv(W_1)W = W_1^H W.$$

For a type II codebook, one method to calculate the precoding matrix indicator (PMI) at the UE side is to find the beams and the corresponding coefficients to approximate the precoding vector to be reported per subband. As a result, the overhead of type II codebook increases approximately linearly with the number of reported subbands. It may be possible to reduce CSI overhead by allowing larger subband sizes, that may consequently reduce the number of subbands to be reported, but the performance may be degraded accordingly if such a mechanism is used. The channel of different subbands may experience a certain level of correlation, however, that can be exploited to further reduce the feedback overhead by performing compression in the frequency domain. Some basic patterns may exist along the frequency dimension for each row of the space-frequency matrix to facilitate a more compressed codebook using approaches similar to those applied for the spatial domain compression in Rel. 15.

In Release 16 (Rel. 16) of the 3GPP 5G standard, the precoding matrix W is expressed as:

$$W = W_1 \tilde{W}_2 W_{freq}^H$$

where $W_1$ is for spatial domain compression, $W_{freq} = [f_0 \dots f_{K-1}]$ is K $\times$ $N_{sb}$ for frequency domain compression, and $\tilde{W}_2$ is a compressed combination coefficient matrix that has dimension of $2L \times K$. The UE then needs to report DFT beams $W_1 = \{b_i\}$, $W_{freq} = \{f_k\}$, and linear combination coefficients $\tilde{W}_2 = \{\omega_{i,k}\}$:

$$W = \begin{bmatrix} \sum_{k=0}^{K-1} \sum_{i=0}^{L-1} \omega_{i,k} \boldsymbol{b}_i \boldsymbol{f}_k^H \\ \sum_{k=0}^{K-1} \sum_{i=0}^{L-1} \omega_{i+L,k} \boldsymbol{b}_i \boldsymbol{f}_k^H \end{bmatrix}$$

This is illustrated in FIG. 2B.

Since most of type II feedback overhead is due to quantization of subband coefficients, this scheme will reduce the amount of reported coefficients significantly. The granularity of the frequency domain compressed CSI depends on the number new bases. For example, if the multiple-input and multiple-output (MIMO) channel is flat, the value of K can be set to be 1 and $W_{freq}$ is an all-one vector. Alternatively, when there is no channel correlation among different subbands, the value of $K$ is set to be $N_{sb}$ and $W_{freq}$ is an identity matrix (i.e., this scheme then falls back to a Rel-15 Type II codebook).

The relation between number of frequency domain (FD) units before compression $N_{sb}$ (PMI subband size) and number of FD units after compression $K$ is given by

$$K = \lceil p \times N_{\mathrm{sb,CQI}} \rceil$$

where $p \in \{\frac{1}{4}, \frac{1}{2}\}$ and $N_{\mathrm{sb,CQI}}$ is the Channel Quality Indicator (CQI) subband size

$$N_{\mathrm{sb,CQI}} = N_{sb}/R$$

where $R \in \{1,2\}$ is the ratio between PMI and CQI subband sizes ($R$ = 1 is the default value, $R$ = 2 is optional). The values of $R$ and $p$ are higher-layer configured to indicate the value of $K$. For the selection of the "FD basis" (i.e., the indices of the K DFT vectors out of $N_{sb}$), there are two cases discussed in Rel. 16:

(i) If $N_{sb} \leq 19$: free choice of any $K$ indices (indicated by a $\left\lceil \log_2 \binom{N_{sb}-1}{K-1} \right\rceil$ -bit indicator).

(ii) If $N_{sb} > 19$: a two-step approach is used:

1. UE selects and reports a parameter $K_{initial} \in \{-(N'_{sb}-1), -(N'_{sb}-2), .., -1, 0\}$ where $N'_{sb} = 2K$.

2. UE selects K indices out of $N'_{sb}$, from the intermediate set $IntS$ = {mod($K_{initial}$ + n, Nsb)}, $n$=0, 1, …, $N'_{sb}$-1.

The matrix $\tilde{W}_2$ comprises amplitude and phase coefficients, which create linear combinations of the $L$ selected beams. Out of the $2LK$ coefficients, only a reduced number $K_{NZ,i} \leq K_0$ is reported for each layer $i$, where

$$K_0 = \lceil \beta \times 2LK \rceil.$$

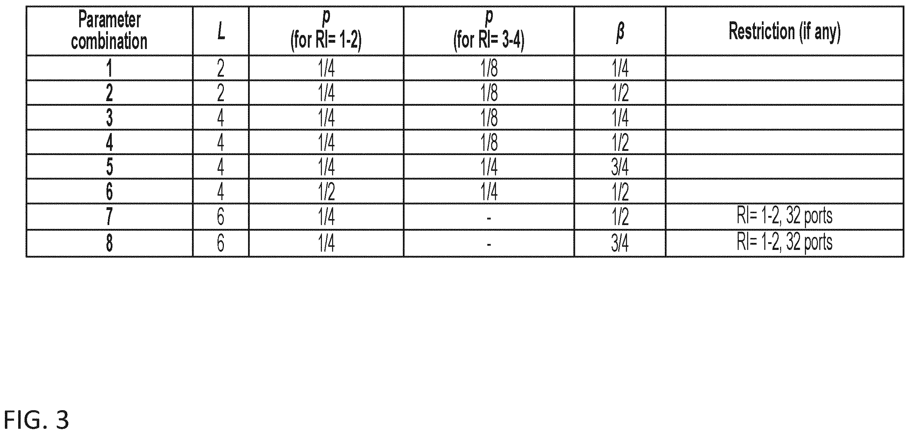

The parameter $\beta \in \left\{\frac{1}{4}, \frac{1}{2}, \frac{3}{4}\right\}$ is higher layer configured. Some parameters for FD/SD compression are restricted to some predefined combinations, given by the table of FIG. 3.

As mentioned above, in Rel. 16, the CSI measurement and reporting rate is defined based on the channel coherence time in order to fairly track the channel time variation. In a high or medium UE mobility scenario, however, Doppler spread implies a fast fading channel and coherence time becomes very small. In such scenarios, if CSI measurements are not sufficiently frequent with respect to the channel variation rate, performance significantly degrades due to CSI aging. In order to deal with such a fast-fading channel and consequently track CSI variations, one solution is for the network to trigger more frequent CSI measurements with a higher CSI reference signal (CSI-RS) transmission rate either through configuration of smaller periodicity (for persistent / semi-persistent (P/SP) CSI-RS resources) or through transmission of aperiodic CSI-RS resources. The higher CSI update rate however is a costly solution as it drastically increases the resource overhead, as well as UE complexity and power consumption.

An alternative solution is to utilize Doppler domain information to predict the channel variation at the gNB and reduce the reporting occurrences. This may decrease the resource overhead and UE complexity significantly. In the current New Radio (NR) CSI framework, the time domain correlation information between different instants is difficult to obtain at the gNB. This is due the fact that the legacy PMI feedback is based on a single channel realization observation and the time domain correlation information between different channel realizations may not be kept completely in their corresponding reported PMIs. Moreover, due to quantization for PMI reporting, the time domain correlation information may not be fully perceived at the gNB. That is, a joint CSI framework may be required, where the reporting corresponding to multiple instants implicitly or explicitly includes time-domain channel correlation information.

The following sections discuss CSI reporting enhancements for high or medium UE velocities. The reporting may include implicit reporting or explicit reporting.

Implicit reporting may be performed as follows. In NR systems, the CSI framework is based on a linear codebook design that maps symbols in the frequency domain to the transmit antennas. The time domain channel variation is tracked discretely through recurring CSI reporting. At each CSI reporting instant, the gNB is assumed to select the precoding matrix according to the CSI feedback including information on the precoding matrix index, the rank indicator, and the channel quality indicator. Such a discrete CSI reporting design may not be a practical framework for high or medium UE mobility scenarios due to extreme overhead. To address this issue, the CSI framework may be enhanced to additionally provide time-domain channel correlation information to the gNB. As mentioned earlier, the gNB is may not be able to fully derive the time domain correlation information between different channel realizations from the discrete reports of PMIs. A joint CSI reporting framework may alleviate the issue and provide time-domain channel correlation information to the gNB. This time-domain channel correlation information may enable the gNB to predict the channel variation and consequently reduce the required CSI reporting recurrence. A joint CSI feedback may thus include the mapping information of time-frequency domain to the transmit antennas.

It can be assumed that precoding matrix at the $n^{th}$ CSI reporting time instance is correlated to the precoding matrixes of the last $N_{csi}$ CSI reporting instances. This information can be used to predict and extrapolate precoder variation with some level of accuracy and consequently may reduce CSI reporting occurrence. In some embodiments, auto-regression models are used. For example, an order-p autoregressive model for the precoding matrix:

$$W^{(n+1)} = a^{(1)}W^{(n)} + a^{(2)}W^{(n-1)} + \cdots + a^{(p)}W^{(n-p+1)} + N$$

where $W^{(n+1)}$ is the precoder matrix at time $(n + 1)T_s$ ($T_s$ is the symbol rate), $a^{(1)}, ..., a^{(p)}$ are autoregressive (AR) coefficients and N is noise (e.g., additive white Gaussian noise (AWGN)). It is noted that each of AR coefficients $a^{(i)}$, $i = 1 ..., p$ can be in general a matrix of dimensions $N_{tx} \times N_{sb}$ with an element-wise multiplication operation or simply a scalar value.

Multiplying both sides of above equation by $W^{(n)H}$ and taking the expectation, results in:

$$R_W^{(n+1,n)} = a^{(1)}R_W^{(n,n)}R_W(0) + a^{(2)}R_W^{(n,n-1)} + \cdots + a^{(p)}R_W^{(n,n-p+1)}$$

Repeating the same procedure with $W^{(n-1)H}$, $W^{(n-2)H}$ ... and $W^{(n-p+1)H}$, and assuming a wide-sense stationary (WSS) process, results in Yule-Walker equations, as:

$$\begin{bmatrix} R_W^{(1)} \\ \vdots \\ R_W^{(p)} \end{bmatrix} = \begin{bmatrix} R_W^{(0)} & \cdots & R_W^{(p-1)} \\ \vdots & \ddots & \vdots \\ R_W^{(p-1)} & \cdots & R_W^{(0)} \end{bmatrix} \begin{bmatrix} a^{(1)} \\ \vdots \\ a^{(p)} \end{bmatrix}$$

The $a^{(1)}, .., a^{(p)}$ coefficients may then be estimated as:

$$\begin{bmatrix} \widehat{a}^{(1)} \\ \vdots \\ \widehat{a}^{(p)} \end{bmatrix} = \begin{bmatrix} R_W{}^{(0)} & \cdots & R_W{}^{(p-1)} \\ \vdots & \ddots & \vdots \\ R_W{}^{(p-1)} & \cdots & R_W{}^{(0)} \end{bmatrix}^{-1} \begin{bmatrix} R_W{}^{(1)} \\ \vdots \\ R_W{}^{(p)} \end{bmatrix} = R_W{}^{-1} r_w$$

That is with full knowledge of precoder autocorrelation matrix $R_w$, the $\hat{a}^{(1)}, ..., \hat{a}^{(p)}$ coefficients may be derived, and $W^{(n+1)}$ may be extrapolated based on the last $p$ observations of W (i.e. $W^{(n)}, W^{(n-2)} + ..., W^{(n-p+1)}$). In the legacy CSI framework, the gNB needs to calculate a time-domain correlation $R_w$ based on observation of a quantized version of the precoder matrixes over discrete CSI reports. Due to quantization, the gNB may not able to fully recover that correlation information. To address this issue, the time-domain channel correlation information can be reported as a separate matrix in the CSI report where the time-domain correlation of precoder matrixes are calculated at the UE and then quantized and reported to the gNB. This may generally provide less conveyance loss of correlation information and hence more accuracy of $W^{(n+1)}$ estimation at the gNB. For example, the CSI report at the $n^{th}$ CSI reporting time instance includes a precoding matrix $W^{(n)}$ as well as a precoder correlation matrix $W_R^{(n)}$ for each layer where the precoding matrix is defined as in the legacy CSI reporting framework:

$$W^{(n)} = W_1{}^{(n)} W_2{}^{(n)},$$

with $W_1^{(n)}$, a $N_{tx} \times 2L$ matrix that includes the wideband spatial 2D-DFT beams, being given by:

$$W_1{}^{(n)} = \begin{bmatrix} b_0 \dots b_{L-1} & 0 \\ 0 & b_0 \dots b_{L-1} \end{bmatrix}$$

and $W_2^{(n)}$, a $2L \times N_{sb}$ linear combination coefficient matrix, being given by:

$$W_2{}^{(n)} = \widetilde{W}_2 W_{freq}^H$$

where $\widetilde{W}_2$ is a frequency-domain compressed coefficient matrix that has dimensions of $2L \times K$ and $W_{freq} = [f_0 \dots f_{K-1}]$ has dimensions of $K \times N_{sb}$ representing a set of bases for frequency domain compression.

For precoder correlation matrix $W_R^{(n)}$ in the CSI report, the UE maintains the channel state information from the last $N_{csi} - 1$ CSI reporting instances and calculates a time domain correlation matrix of precoder $R_W^{(n,n-m)}$, $m = 0, ..., N_{csi} - 1$ element-wise to be included in the $W_R^{(n)}$ matrix:

$$R_W{}^{(n,n-m)}$$

$$= \begin{bmatrix} E\{W^{(n)}(1,1)W^{(n-m)^H}(1,1)\} & \cdots & E\{W^{(n)}(1,N_{sb})W^{(n-m)^H}(1,N_{sb})\} \\ \vdots & \ddots & \vdots \\ E\{W^{(n)}(N_{tx},1)W^{(n-m)^H}(N_{tx},1)\} & \cdots & E\{W^{(n)}(N_{tx},N_{sb})W^{(n-m)^H}(N_{tx},N_{sb})\} \end{bmatrix}$$

and

$$W_R{}^{(n)} = [R_W{}^{(n,n)}; ...; R_W{}^{(n,n-N_{csi}+1)}]_{N_{tx} \times N_{sb} \times N_{csi}}$$

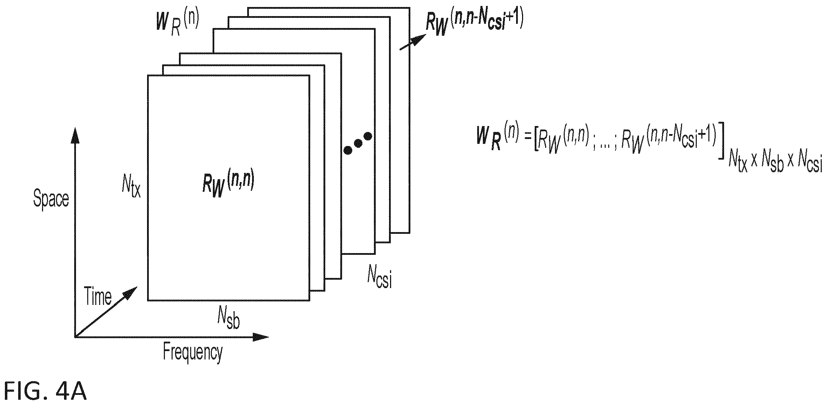

This is illustrated in FIG. 4A.

Compressing the $\boldsymbol{W_R}^{(n)}$ matrix in the spatial domain using wideband 2D-DFT beams following the same logic as in Rel. 16, results in:

$$\boldsymbol{W_R}^{(n)} = W_1^{(n)}\overline{\boldsymbol{W}}_R^{(n)},$$

where

$$W_1 = \begin{bmatrix} b_0 \dots b_{L-1} & 0 \\ 0 & b_0 \dots b_{L-1} \end{bmatrix}$$

And further compressing $\overline{\boldsymbol{W}}_R^{(n)}$ matrix in the frequency domain with the same logic as in Rel. 16, results in:

$$\overline{\boldsymbol{W}}_R^{(n)} = \widetilde{\boldsymbol{W}}_R^{(n)} W_{freq}$$

where the time-domain correlation information can be reported on $W_{freq} = [f_0 \dots f_{K-1}]$ bases as below:

$$\widetilde{\boldsymbol{W}}_R^{(n)} = [\tilde{R}_W^{(n,n)}; \dots; \tilde{R}_W^{(n,n-N_{csi}+1)}]_{2L \times K \times N_{csi}}$$

With $\tilde{R}_W$ as the element-wise time domain correlation matrix of $\widetilde{W}_2$ (i.e., the frequency domain compressed precoder matrix as defined in Rel. 16):

$$\tilde{R}_W^{(n,n-m)} = \begin{bmatrix} E\{\widetilde{W}_2^{(n)}(1,1)\widetilde{W}_2^{(n-m)^H}(1,1)\} & \cdots & E\{\widetilde{W}_2^{(n)}(1,K)\widetilde{W}_2^{(n-m)^H}(1,K)\} \\ \vdots & \ddots & \vdots \\ E\{\widetilde{W}_2^{(n)}(2L,1)\widetilde{W}_2^{(n-m)^H}(2L,1)\} & \cdots & E\{\widetilde{W}_2^{(n)}(2L,K)\widetilde{W}_2^{(n-m)^H}(2L,K)\} \end{bmatrix}$$

Hence, the $\boldsymbol{W_R}^{(n)}$ matrix is expressed as:

$$\boldsymbol{W_R}^{(n)} = \begin{bmatrix} \sum_{m=0}^{N_{csi}-1}\sum_{k=0}^{K-1}\sum_{i=0}^{L-1} \omega_{i,k,m}\boldsymbol{b}_i f_k^H \\ \sum_{m=0}^{N_{csi}-1}\sum_{k=0}^{K-1}\sum_{i=0}^{L-1} \omega_{i+L,k,m}\boldsymbol{b}_i f_k^H \end{bmatrix}$$

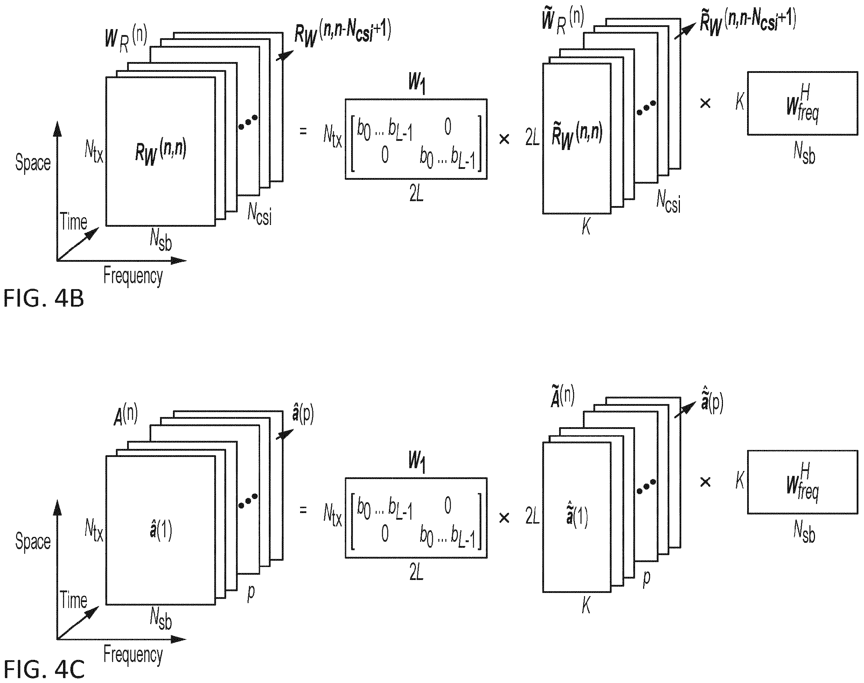

where the $[\omega_{i,k,m}]_{2L \times K \times N_{csi}}$ are the elements of the precoder correlation matrix $\widetilde{\boldsymbol{W}}_R^{(n)}$. This is illustrated in FIG. 4B.

The above scheme is based on the assumption of an order-p autoregressive model for the compressed precoding matrix $\widetilde{W}_2$ (instead of $W$) as below:

$$\widetilde{W}_2^{(n+1)} = \widetilde{a}^{(1)}\widetilde{W}_2^{(n)} + \widetilde{a}^{(2)}\widetilde{W}_2^{(n-1)} + \cdots + \widetilde{a}^{(p)}\widetilde{W}_2^{(n-p+1)} + N$$

where $\widetilde{a}^{(1)}, ..., \widetilde{a}^{(p)}$ are compressed AR coefficients and each $\widetilde{a}^{(i)}$, $i = 1 ..., p$ can be in general a $2L \times K$ matrix (used with element-wise multiplication) or a simply a scalar value.

Another alternative approach is that the UE may estimate the $\hat{a}^{(1)}, ..., \hat{a}^{(p)}$ coefficients by itself and then include these estimated values instead of time domain correlation information inside the CSI reports. For example, the CSI report at $n^{th}$ CSI reporting time instance may include the precoding matrix $W^{(n)}$ as well as a correlation coefficient matrix $A^{(n)}$ for each layer, where the precoding matrix is defined as in legacy CSI reporting framework:

$$W^{(n)} = W_1^{(n)}\widetilde{W}_2 W_{freq}^H$$

and the correlation coefficient matrix $A^{(n)} = [\hat{a}^{(1)}; ... ; \hat{a}^{(p)}]$ is generally a $N_{tx} \times N_{sb} \times p$ matrix (i.e. corresponding to $W$)

or $2L \times K \times p$ in a compressed form $\widetilde{A}^{(n)} = \left[\widehat{\widetilde{a}}^{(1)}; ... ; \widehat{\widetilde{a}}^{(p)}\right]$ (i.e. corresponding to $\widetilde{W}_2$). $p$ is the order of the autoregressive model. Hence, the correlation coefficient matrix is expressed as:

$$A^{(n)} = W_1^{(n)}\widetilde{A}^{(n)} W_{freq}^H$$

This is illustrated in FIG. 4C.

In such a case, with observations of precoder matrixes at previous CSI instances as well as knowledge of $\hat{a}^{(1)}; ... ; \hat{a}^{(p)}$ (additionally reported by the UE), the gNB can then assume an autoregressive model as below to generate an initial estimate of the precoding matrix $W^{(n+1)}$:

$$W^{(n+1)} = \widehat{a}^{(1)}W^{(n)} + \widehat{a}^{(2)}W^{(n-1)} + \cdots + \widehat{a}^{(p)}W^{(n-p+1)} + N$$

where due to presentence of AWGN noise $N$, the gNB may then apply an estimation technique such as maximum likelihood, least square, minimum mean squared error (MMSE), Kalman filtering or Wiener filtering to predict the precoder matrix $W^{(n+1)}$ at time $(n + 1)T_s$.

Other alternative solutions may rely on other linear prediction techniques at the UE such that the UE may calculate a coefficient matrix or state transition matrix using a Kalman filtering method, Wiener filtering method or other non-linear techniques. In such a scheme, the UE may periodically report the $A^{(n)}$ matrix containing a coefficient matrix or a state transition matrix for channel precoder $W$, and the gNB may use that information as well as observations of previous CSI reporting instances to predict the precoding matrix.

The CSI reporting overhead may be reduced by further compressing the precoder matrix in time domain. This can be achieved by compressing the $W_R(n)$ matrix using a set of time-domain bases assuming a basic pattern may exist along the time dimension using similar approaches as applied for the spatial and frequency domain compression in the legacy CSI reporting framework:

$$W_R^{(n)} = W_1^{(n)}\widetilde{W}_R^{(n)} W_{freq}^H W_{time}^H$$

where $\check{W}_R^{(n)}$ is a time-domain compressed precoder correlation matrix that has dimensions of $2L \times K \times M$ and $W_{time} = [\tau_0 ... \tau_{M-1}]$ is a $M \times N_{csi}$ basis for time domain compression. The $W_R^{(n)}$ matrix is then derived as:

$$W_R{}^{(n)} = \begin{bmatrix} \sum_{m=0}^{M-1} \sum_{k=0}^{K-1} \sum_{i=0}^{L-1} \omega_{i,k,m} b_i f_k^H \tau_m^H \\ \sum_{m=0}^{M-1} \sum_{k=0}^{K-1} \sum_{i=0}^{L-1} \omega_{i+L,k,m} b_i f_k^H \tau_m^H \end{bmatrix}$$

Similarly:

$$A^{(n)} = W_1{}^{(n)} \breve{A}^{(n)} W_{freq}^H W_{time}^H = \begin{bmatrix} \sum_{m=0}^{M-1} \sum_{k=0}^{K-1} \sum_{i=0}^{L-1} \alpha_{i,k,m} b_i f_k^H \tau_m^H \\ \sum_{m=0}^{M-1} \sum_{k=0}^{K-1} \sum_{i=0}^{L-1} \alpha_{i+L,k,m} b_i f_k^H \tau_m^H \end{bmatrix}$$

where the $[\alpha_{i,k,m}]_{2L \times K \times M}$ are the elements of correlation coefficient matrix $\breve{A}^{(n)}$.

Furthermore, in all of the above schemes, it is assumed that the time domain channel correlation information is reported for all transmitter ports (or alternatively 2D-DFT beams) and all subcarriers (or alternatively frequency domain compression bases). That is, each $a^{(i)}$, $i = 1 \dots, p$ is in general assumed to be a matrix of $N_{tx} \times N_{sb}$ (or alternatively $2L \times K$). This, however, may not be necessary as the channel correlation information may not always change over frequency or wideband beams. In such a case, the schemes can be simplified by assuming that each $a^{(i)}$, $i = 1 \dots, p$ is a vector (e.g. $N_{tx} \times 1$ (or alternatively $2L \times 1$) or $1 \times N_{sb}$ (or alternatively $1 \times K$)) or simply a scalar value. For example, the precoder correlation matrix $\tilde{W}_R{}^{(n)}$ or correlation coefficient matrix $\breve{A}^{(n)}$ may be defined over only one frequency subband (or alternatively frequency domain basis) but nonetheless be applicable to all subbands (or alternatively frequency domain bases). In Frequency Range 1 (FR1) applications, it may be that even in medium or high UE mobility scenarios, the wideband spatial 2D-DFT beams (i.e., $W_1{}^{(n)}$) remain the same across multiple CSI reporting time instances. That is, the fast fading effect as a result of Doppler spread may only be apparent in the linear combination coefficient matrix (i.e. $W_2{}^{(n)}$). This simplifies the above schemes such that the precoder correlation matrix $\tilde{W}_R{}^{(n)}$ or correlation coefficient matrix $\breve{A}^{(n)}$ may be defined over only one transmit port (or alternatively 2D-DFT beam) but yet be applicable to all ports (or alternatively beams).

The signaling of such a CSI reporting framework may be performed as follows. The value of $N_{csi}$ and $p$ in the above schemes may be Radio Resource Control (RRC) configured to the UE. The selected time domain basis subsets are indicated per layer (i.e., $N_{csi_l}$ or $p_l$, $l = 0,1, \dots, RI - 1$) where $\left\lceil \log_2 \binom{N_{csi} - 1}{N_{csi_l} - 1} \right\rceil$ or $\left\lceil \log_2 \binom{p - 1}{p_l - 1} \right\rceil$ bits may be required to indicate the time domain basis subset selected for the $l^{th}$ layer.

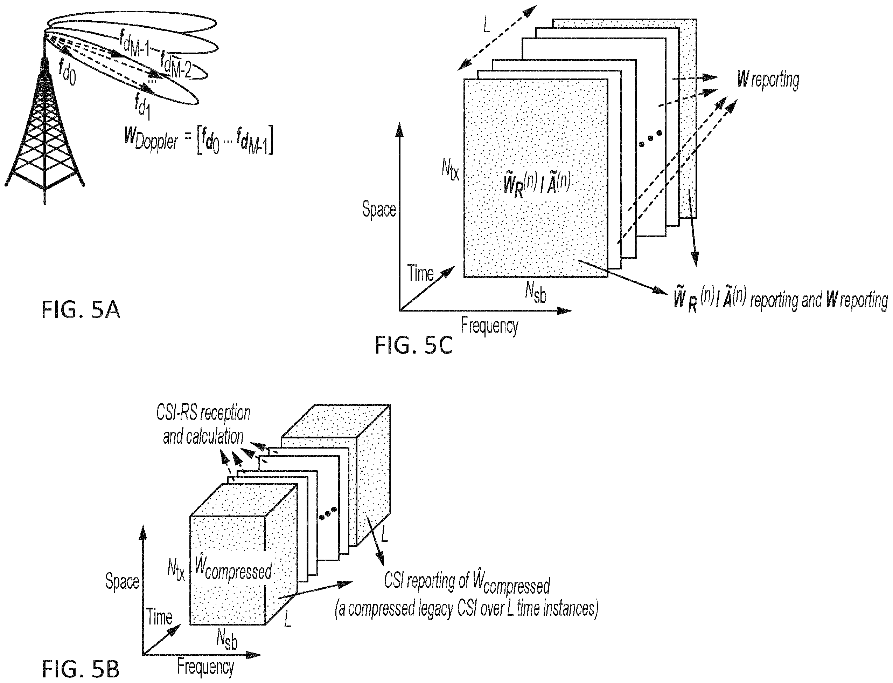

In all of the above schemes, channel correlation information over time is derived and included inside CSI reporting in the time domain. This may increase CSI reporting overhead drastically. To address this, one solution is that channel correlation information may be reported to the gNB in the Doppler domain instead of the time domain. The Doppler domain is illustrated in FIG. 5A.

Time domain channel correlation information can be conveyed in the Doppler domain with a sparser matrix. This may significantly reduce the CSI reporting overhead. This can be seen as each element of the channel matrix has several Doppler components inside that can be expressed using a linear combination of a set of Doppler-domain basis:

$$W_R^{(n)} = W_1^{(n)} \widetilde{W}_R^{(n)} W_{freq}^H W_{Doppler}^H = \begin{bmatrix} \sum_{m=0}^{M-1}\sum_{k=0}^{K-1}\sum_{i=0}^{L-1} \omega_{i,k,m} b_i f_k^H f_{d_m}^H \\ \sum_{m=0}^{M-1}\sum_{k=0}^{K-1}\sum_{i=0}^{L-1} \omega_{i+L,k,m} b_i f_k^H f_{d_m}^H \end{bmatrix}$$

And similarly:

$$A^{(n)} = W_1^{(n)} \widetilde{A}^{(n)} W_{freq}^H W_{Doppler}^H = \begin{bmatrix} \sum_{m=0}^{M-1}\sum_{k=0}^{K-1}\sum_{i=0}^{L-1} \alpha_{i,k,m} b_i f_k^H f_{d_m}^H \\ \sum_{m=0}^{M-1}\sum_{k=0}^{K-1}\sum_{i=0}^{L-1} \alpha_{i+L,k,m} b_i f_k^H f_{d_m}^H \end{bmatrix}$$

where $W_{Doppler} = [f_{d0} \ldots f_{dM-1}]$ is an $M \times 1$ Doppler-domain basis. The value of $M$ is RRC configured to the UE. The selected Doppler domain basis subset are indicated per layer (i.e. $M_l$, $l$ = 0,1, ..., $RI$ - 1) where $\left\lceil \log_2 \binom{M-1}{M_l-1} \right\rceil$ bits may be required to indicate the Doppler-domain basis subset selected for the $l^{th}$ layer.

In all of the above discussed CSI reporting frameworks, every CSI-RS transmission instance is accompanied with a corresponding reporting instance as in the current specification (e.g., in Rel. 16). This may not be necessary, because time domain correlation information of the channel may be included in the CSI report, and this information may reduce reporting occurrence and overhead. Applicable to all of the schemes discussed above, CSI reporting may be thus designed to be done with $L$ times larger periodicity than CSI-RS transmission periodicity. With this scheme, the UE may observe the reception of every CSI-RS transmission instance and may derive legacy CSI for each one of those instances. The CSI reporting may happen every $L^{th}$ CSI-RS reception where the UE may report a compressed CSI (including all calculated CSIs) to the gNB. This information is used as training data at the gNB to predict and track the precoder matrix variation over time.

The CSI reporting of the precoder matrix may have an additional dimension representing time. That is, the UE may need to inform the gNB about precoding coefficients over frequency subcarriers as well as L time instances. Hence, for each layer of transmission, $\hat{W}_{compressed}$ can be derived as a concatenation of the precoding matrixes $W^{(n)}$ on CSI time instances of $n$ = 1,.., $L$:

$$\widehat{W}_{compressed} = [W^{(1)}; W^{(2)}, \ldots, W^{(L)}],$$

where each $W^{(n)}$ is defined as in the legacy CSI reporting framework:

$$W^{(n)} = W_1^{(n)} \widetilde{W}_2 W_{freq}^H = \begin{bmatrix} \sum_{k=0}^{K-1}\sum_{i=0}^{L-1} \omega_{i,k} b_i f_k^H \\ \sum_{k=0}^{K-1}\sum_{i=0}^{L-1} \omega_{i+L,k} b_i f_k^H \end{bmatrix}$$

This is illustrated in FIG. 5B.

The CSI reporting overhead may then be reduced by further compressing $\hat{W}_{compressed}$ in the time domain using a set of time-domain bases:

$$\widehat{W}_{compressed} = \widetilde{W}_{compressed} W_{time}^H = \begin{bmatrix} \sum\limits_{m=0}^{M-1}\sum\limits_{k=0}^{K-1}\sum\limits_{i=0}^{L-1} \omega_{i,k,m} b_i f_k^H \tau_m^H \\ \sum\limits_{m=0}^{M-1}\sum\limits_{k=0}^{K-1}\sum\limits_{i=0}^{L-1} \omega_{i+L,k,m} b_i f_k^H \tau_m^H \end{bmatrix}$$

where $W_{time} = [\tau_0 \ ... \ \tau_{M-1}]$ is an M $\times$ L basis for time domain compression and each of the $[\omega_{i,k,m}]_{2L \times K \times M}$ is an element of the compressed coefficient matrix. Another interpretation of these $[\tau_0 \ ... \ \tau_{M-1}]$ bases is that $\widetilde{W}_{compressed}$ is a compressed precoding matrix conveyed in the Doppler domain with a sparser matrix (as opposed to $\hat{W}_{compressed}$ that is a compressed precoding matrix conveyed in the time domain). This can be seen as each element of the channel matrix has several Doppler components inside that can be expressed using a linear combination of a set of Doppler-domain bases:

$$\widehat{W}_{compressed} = \widetilde{W}_{compressed} W_{Doppler}^H = \begin{bmatrix} \sum\limits_{m=0}^{M-1}\sum\limits_{k=0}^{K-1}\sum\limits_{i=0}^{L-1} \omega_{i,k,m} b_i f_k^H f_{d_m}^H \\ \sum\limits_{m=0}^{M-1}\sum\limits_{k=0}^{K-1}\sum\limits_{i=0}^{L-1} \omega_{i+L,k,m} b_i f_k^H f_{d_m}^H \end{bmatrix}$$

where $W_{Doppler} = [f_{d_0} \ ... f_{d_{M-1}}]$ is an M $\times$ 1 Doppler-domain basis. The value of $M$ in both above schemes is RRC configured to the UE. The selected basis subsets are indicated per layer (i.e. $M_l$, $l$ = 0,1, ..., $RI$ - 1) where $\left\lceil \log_2 \binom{M-1}{M_l-1} \right\rceil$ bits may be required to indicate time domain basis subset selected for $l^{th}$ layer.

As mentioned above, due to CSI reporting quantization, the gNB may also require the time domain correlation information of the channel or precoder matrix. An alternative approach, more compatible with the current specification, is that CSI reporting in its legacy form is done after every CSI transmission instance but the new time domain correlation information $W_R$ is only included inside CSI reporting every $L^{th}$ CSI report instances. The UE may observe the reception of every CSI-RS transmission instance and derive the corresponding time domain correlation for each one of those instances but report CSI (including time domain correlation information) to the gNB only after every $L^{th}$ CSI-RS reception. This is illustrated in FIG. 5C.

Explicit reporting may be performed as follows. An alternative solution is that the UE explicitly report Doppler shift values to the gNB instead of reporting time correlation information. This information may be used at the gNB with tapped delay line (TDL) or clustered delay line (CDL) channel modelling to predict the channel variation over time. This may however require an accurate estimate of Doppler shifts at the UE and a channel reciprocity assumption. To do so, one approach is that multiple CSI-RS resources are transmitted consequently (or with a reasonably small time gap) in a bundle form at each CSI acquisition time instance and all those resources are used jointly by the UE for more accurate Doppler shift estimation. This approach, however, may imply a large resource overhead. Another alternative solution is that each CSI acquisition is paired with a timing reference signal (TRS) signal transmission with a reasonable time gap (e.g. less than CSI aging) so that the Doppler shift estimate by the UE can be included inside the CSI reporting. TRS signals are specifically designed to aid the UE to track frequency offset and because of higher time and frequency domain density of TRS signals, the UE can provide an accurate estimate of Doppler shift and feed it back to the gNB inside the corresponding CSI report.

In TDL channel modeling, the channel impulse response is shown as:

$$H(\tau, t) = \sum_{k=0}^{L-1} a_{k,t}\, \delta(t - \tau_k)$$

where $a_{k,t}$ and $\tau_k$ denote the amplitude and delay of $k^{th}$ tap in tapped delay line model and $L$ is the total number of taps. Each channel tap $a_{k,t}$ represents sum of infinite random propagation paths due to scatterers uniformly distributed around a circle. That is, according to the central limit theorem, $a_{k,t}$ is a complex random variable where its real and imaginary parts are independent and identically distributed Gaussian random variables at each time $t$.

The second-order statistics of the TDL channel is shown to be equal to $J_0(2\pi f_D(t_2 - t_1))$ where $J_0$ is the zeroth-order Bessel function of the first kind and $f_D$ is the maximum Doppler shift. The channel autocorrelation function may be used to derive the Doppler power spectral density. Performing a Fourier transform, the Doppler spectrum is derived as below which is a classical U-shaped Jakes spectrum with two peaks at the positive and negative of the maximum Doppler frequency:

$$S_H(f) = \frac{rect(\frac{f}{2f_D})}{\pi f_D \sqrt{1 - (\frac{f}{f_D})^2}}$$

A Jake process is usually modelled using an autoregressive model due to the fact that the power spectral density (PSD) of an autoregressive process has the rational form. An autoregressive model employs all-pole infinite-impulse response filtering to shape the spectrum of an uncorrelated Gaussian process to match the Doppler spectrum of the Jake process. To illustrate, assuming an auto-regressive model for a channel with order $p$, the channel at time $(n + 1)T_s$ ($T_s$ is the symbol rate) is defined as:

$$H^{(n+1)} = a^{(1)} H^{(n)} + a^{(2)} H^{(n-1)} + \cdots + a^{(p)} H^{(n-p+1)} + N,$$

where $a^{(1)}, \ldots, a^{(p)}$ are AR coefficients and N is AWGN noise. The corresponding PSD of this $AR(p)$ model is derived as:

$$S_H(f) = \frac{\sigma_N^2}{|1 + \sum_{k=1}^{P} a^{(k)} e^{-j2\pi fk}|^2}$$

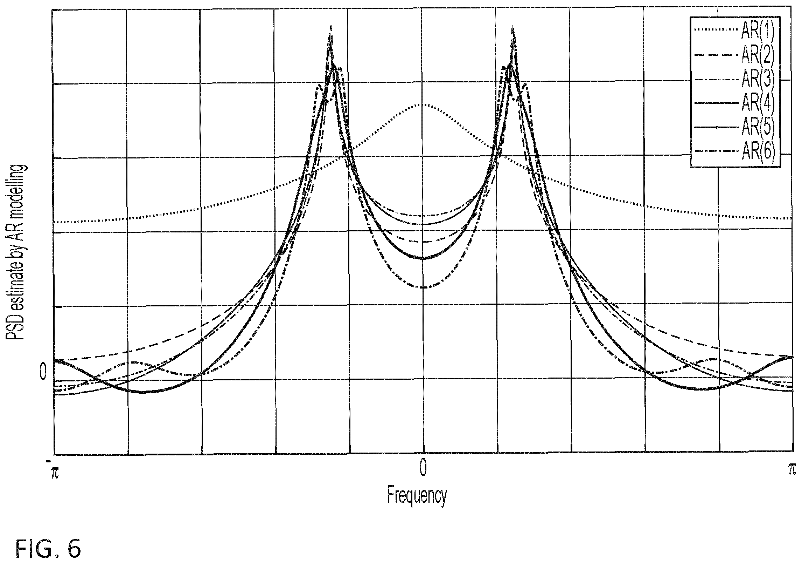

where $\sigma_N^2$ is the variance of AWGN noise N. A second order autoregressive model has two peaks in the spectrum, between $[-\pi, \pi]$, that can be seen as the positive and negative of the maximum Doppler frequency in the U-shaped Jakes spectrum. The location and the sharpness of these peaks may be adapted by the order of $p$ and through advanced cascading techniques of several AR models. This is illustrated in FIG. 6.

Therefore, with a correct choice of $p$, an auto-regressive model can be used to closely approximate a U-shaped Doppler spectrum. It is noted that many approaches such as a Markov chain, a subspace-based approach using ESPRIT, the Root-MUSIC algorithm, neural networks, and Kalman filtering can be used to predict channel profile as all may be suitable for generating correlated Rayleigh processes. Among these approaches, autoregressive modelling may be an effective method to predict the channel profile due to its simplicity and its being closely tied to linear prediction.

With knowledge of the Doppler shift provided by UE explicit reporting, the gNB may predict channel variation over time. One implementation approach at the gNB is that the gNB uses Doppler shift values reported by the UE to derive the autocorrelation of the channel coefficients in the time domain since, as shown above:

$$R_H(m) = E\{H^{(n)} H^{(n-m)^H}\} = J_0(2\pi f_D m T_s)$$

Then, using the Yule-Walker equations, the gNB may estimate coefficients of an $AR(p)$ model for channel as below:

$$\begin{bmatrix} \hat{a}^{(1)} \\ \vdots \\ \hat{a}^{(p)} \end{bmatrix} = \begin{bmatrix} R_H(0) & \cdots & R_H(p-1) \\ \vdots & \ddots & \vdots \\ R_H(p-1) & \cdots & R_H(0) \end{bmatrix}^{-1} \begin{bmatrix} R_H(1) \\ \vdots \\ R_H(p) \end{bmatrix}$$

Thus the gNB may predict the channel matrix at time $(n+1)T_s$ by using these estimated AR coefficients and observation of $H^{(n)}, ..., H^{(n-p+1)}$ as inputs to an estimation technique like maximum likelihood estimation, least square estimation, minimum mean squared error (MMSE) estimation, Kalman filtering, or Wiener filtering.

In CDL channel modeling, however, explicit reporting of Doppler shift values may be tap-wise. To illustrate, the CDL channel impulse response is mainly shown as:

$$H_{u,s}^{NLOS}(\tau, t) = \sum_{n=1}^{N} \sum_{m=1}^{M} H_{u,s,n,m}^{NLOS}(t)\delta(\tau - \tau_n)$$

where $H_{u,s,n,m}^{NLOS}(t)$ is the channel coefficients for ray m of cluster n as below:

$$H_{u,s,n,m}^{NLOS}(t) = \sqrt{\frac{P_n}{M}} \begin{bmatrix} F_{rx,u,\theta}(\theta_{n,m,ZOA}, \varphi_{n,m,AOA}) \\ F_{rx,u,\varphi}(\theta_{n,m,ZOA}, \varphi_{n,m,AOA}) \end{bmatrix}^T \begin{bmatrix} e^{j\Phi_{n,m}^{\theta\theta}} & \sqrt{\kappa_{n,m}^{-1}}e^{j\Phi_{n,m}^{\theta\varphi}} \\ \sqrt{\kappa_{n,m}^{-1}}e^{j\Phi_{n,m}^{\varphi\theta}} & e^{j\Phi_{n,m}^{\varphi\varphi}} \end{bmatrix}$$

$$\times \begin{bmatrix} F_{tx,s,\theta}(\theta_{n,m,ZOD}, \varphi_{n,m,AOD}) \\ F_{tx,s,\varphi}(\theta_{n,m,ZOD}, \varphi_{n,m,AOD}) \end{bmatrix}$$

$$\times e^{j2\pi\frac{\hat{r}_{rx,n,m}^T \cdot \bar{d}_{rx,u}}{\lambda_0}} e^{j2\pi\frac{\hat{r}_{tx,n,m}^T \cdot \bar{d}_{tx,s}}{\lambda_0}} e^{j2\pi\frac{\hat{r}_{rx,n,m}^T \cdot \bar{v}}{\lambda_0}t}$$

where $F_{tx,s,\theta}$ and $F_{tx,s,\varphi}$ are the field patterns of transmit antenna element s and $F_{rx,u,\theta}$ and $F_{rx,u,\varphi}$ are the field patterns of receive antenna element u. The $\Phi_{n,m}^{\theta\theta}, \Phi_{n,m}^{\theta\varphi}, \Phi_{n,m}^{\varphi\theta}$ and $\Phi_{n,m}^{\varphi\varphi}$ are random initial phases for each ray m of each cluster n and for four different polarization combinations (i.e. $\theta\theta$, $\theta\phi$, $\phi\theta$ and $\phi\phi$), $\kappa_{n,m}$ is the cross polarization power ratio in linear scale. $\hat{r}_{tx,n,m}$ and $\hat{r}_{rx,n,m}$ are the spherical unit vectors respectively with departure angles $\theta_{n,m,ZOD}$, $\varphi_{n,m,AOD}$ and arrival angles $\theta_{n,m,ZOA}$, $\varphi_{n,m,AOA}$, given by

$$\hat{r}_{tx,n,m} = \begin{bmatrix} sin\theta_{n,m,ZOD}cos\varphi_{n,m,AOD} \\ sin\theta_{n,m,ZOD}sin\varphi_{n,m,AOD} \\ cos\theta_{n,m,ZOD} \end{bmatrix}, \hat{r}_{rx,n,m} = \begin{bmatrix} sin\theta_{n,m,ZOA}cos\varphi_{n,m,AOA} \\ sin\theta_{n,m,ZOA}sin\varphi_{n,m,AOA} \\ cos\theta_{n,m,ZOA} \end{bmatrix}$$

$\bar{d}_{tx,s}$ and $\bar{d}_{rx,s}$ are the location vector of the transmit antenna element s and the receive antenna element u respectively, $\bar{v}$ is the UE velocity vector with speed v, travel angles $\theta_v$ and $\varphi_v$ and is given by

$$\bar{v} = v[sin\theta_v cos\varphi_v \quad sin\theta_v sin\varphi_v \quad cos\theta_v]$$

It is noted that the time variation characteristic of channel impulse response is mainly from Doppler frequency component that is dependent on the arrival angles (the azimuth angle of arrival (AOA), and the zenith angle of arrival (ZOA)), the UE velocity and the travel angles (i.e. $e^{j2\pi\frac{\hat{r}_{rx,n,m}^{T}\cdot\bar{v}}{\lambda_0}t}$ ). Therefore, $H_{u,s}^{NLOS}(\tau, t)$ can be rewritten as below:

$$H_{u,s}^{NLOS}(\tau, t) = \sum_{n=1}^{N}\sum_{m=1}^{M} c_{u,s,n,m} e^{j2\pi f_{D,n,m}t}\delta(\tau - \tau_n)$$

where

$$c_{u,s,n,m} = \sqrt{\frac{P_n}{M}}\begin{bmatrix} F_{rx,u,\theta}(\theta_{n,m,ZOA}, \varphi_{n,m,AOA}) \\ F_{rx,u,\varphi}(\theta_{n,m,ZOA}, \varphi_{n,m,AOA}) \end{bmatrix}^{T}\begin{bmatrix} e^{j\Phi_{n,m}^{\theta\theta}} & \sqrt{\kappa_{n,m}^{-1}}e^{j\Phi_{n,m}^{\theta\varphi}} \\ \sqrt{\kappa_{n,m}^{-1}}e^{j\Phi_{n,m}^{\varphi\theta}} & e^{j\Phi_{n,m}^{\varphi\varphi}} \end{bmatrix}$$

$$\times \begin{bmatrix} F_{tx,s,\theta}(\theta_{n,m,ZOD}, \varphi_{n,m,AOD}) \\ F_{tx,s,\varphi}(\theta_{n,m,ZOD}, \varphi_{n,m,AOD}) \end{bmatrix} e^{j2\pi\frac{\hat{r}_{rx,n,m}^{T}\cdot\bar{d}_{rx,u}}{\lambda_0}} e^{j2\pi\frac{\hat{r}_{tx,n,m}^{T}\cdot\bar{d}_{tx,s}}{\lambda_0}}$$

and $f_{D,n,m} = \frac{\hat{r}_{rx,n,m}^{T}\cdot\bar{v}}{\lambda_0}$ is the Doppler shift corresponding to ray $m$ in cluster $n$. Therefore, by explicit reporting the values of channel tap $c_{u,s,n,m}$, tap positions $\tau_n$ and Doppler shifts $f_{D,n,m}$, the gNB may be able to predict channel variation over time. However, this type of explicit reporting has a large overhead. To address it, another alternative is that the UE's explicit reporting be tap-wise. That is, with

$$H_{u,s}^{NLOS}(\tau, t) = \sum_{n=1}^{N} c_{u,s,n} e^{j2\pi f_{D,n}t}\delta(\tau - \tau_n)$$

where $c_{u,s,n}e^{j2\pi f_{D,n}t} = \sum_{m=1}^{M} c_{u,s,n,m}e^{j2\pi f_{D,n,m}t}$ , the UE can report tap-wise values of $c_{u,s,n}$, $\tau_n$ and Doppler shifts $f_{D,n}$ to the gNB.

Furthermore, the second-order statistics of the CDL channel is derived as:

$$R_{H_{u,s}}(m) = \sum_{n=1}^{N} |c_{u,s,n}|^2 e^{j2\pi f_{D,n}mT_s}$$

Hence, with knowledge of Doppler shifts and channel tap power provided by UE explicit reporting, the gNB can derive the autocorrelation of the channel coefficients in the time domain and predict the channel matrix accordingly, as explained above.

Introduction of new UE capability

As discussed above, the gNB may be unable to fully derive time domain correlation information from multiple CSI reports corresponding to different channel realizations due to the fact that this information may not be kept completely in their reported PMIs.

On the CSI reporting and measurement for the Rel-18 Type-II codebook refinement for high/medium velocities assuming the UE-side prediction, on the definition of UE-side prediction, one of the following alternatives may be employed:

Alt1. UE "predicting" channel/CSI after the slot with a reference resource

Alt2. UE "predicting" channel/CSI after slot n (where the CSI is reported)

With this scheme, the UE may observe the reception of multiple CSI-RS resources (e.g. in a burst format) and then derive a future PMI based on observation and calculation of legacy CSI for multiple CSI-RS transmission instances. The definition of future may be with consideration of either reference resource slot (i.e., Alt1 above ) or reporting slot (i.e., Alt2 above) as a reference slot. The predicted PMI may be included inside the CSI report containing multiple calculated PMIs in a non-compressed structure or a compressed structure using time/Doppler domain bases.

The above discussed scheme may include introduction of a new UE capability that indicates how far in time domain the UE is able to predict the future CSI. To illustrate, this UE capability can be defined in form of a time distance between the prediction point and the reference point (as defined above). This UE capability can be simply based on a specific number of slots or number of orthogonal frequency division multiplexing (OFDM) symbol, or number of CSI-RS periods.

It is noted that for such UE capability, the time distance between the timing of CSI-RS resources and the prediction point plays an important role. Another alternative (in addition to Alt1 and Alt2 above) is that the UE capability is defined on time distance between the timing of CSI-RS resources and the reference point. More than one alternative can also be combined to realize the UE capability. For example, the capability on time distance between the prediction point and the reference point as well as the capability on time distance between the timing of CSI-RS resources and the reference point can be utilized together to effectively realize the capability on time distance between the prediction point and the timing of CSI-RS transmission.

In some embodiments, CSI reporting of the precoder matrix may have an additional dimension representing time where the UE informs the gNB about precoding coefficients over several time instances. For each layer of transmission, the precoder can be derived as a concatenation of the precoding matrixes on several CSI time instances. Furthermore, the UE may reduce the CSI reporting overhead by compressing the precoder in the time domain using a set of time/Doppler-domain bases that are common for all SD/FD bases:

$$\widehat{W}_{compressed} = \begin{bmatrix} \sum_{m=0}^{M-1} \sum_{k=0}^{K-1} \sum_{i=0}^{L-1} \omega_{i,k,m} b_i f_k^H f_{d_m}^H \\ \sum_{m=0}^{M-1} \sum_{k=0}^{K-1} \sum_{i=0}^{L-1} \omega_{i+L,k,m} b_i f_k^H f_{d_m}^H \end{bmatrix}$$

In some embodiments, the total number of Doppler domain (DD) bases (i.e., $M$ or N4, which are used interchangeably herein) is RRC configured to the UE and the selected basis subset (i.e., $M_l$ or Q, which are used interchangeably herein) are indicated per layer.

For the Rel-18 Type-II codebook refinement for high/medium velocities, some embodiments support the following codebook structure where $N_4$ is gNB-configured via higher-layer signaling:

For $N_4$=1, Doppler-domain basis is the identity (no Doppler-domain compression) reusing the legacy $W_1$, $\tilde{W}_2$, and $W_f$, e.g. $W_1 \tilde{W}_2 (W_f)^H$

For $N_4$>1, Doppler-domain orthogonal DFT basis commonly selected for all SD/FD bases reusing the legacy $W_1$ and $W_f$, e.g. $W_1 \tilde{W}_2 (W_f \otimes W_d)^H$

This expression produces a set of precoding matrices corresponding to one or more points in time (e.g., one or more points in time in the future). Each precoding matrix a portion of the result, which is an array product of an array of coefficients ($\tilde{W}_2$) with a plurality of bases (e.g., $W_f$ and $W_d$). As used herein, and "array product" is any product of arrays, including a matrix product or a matrix outer product. As used herein, the term "array" refers to an n-dimensional (e.g., 1-dimensional, 2-dimensional, or 3-dimensional) ordered set of numbers regardless of how stored (e.g., whether stored in consecutive memory locations, or in a linked list).

In the latter case, (i) only Q (denoting the number of selected DD basis vectors) >1 is allowed, and (ii) $Q$ may be RRC-configured (in some embodiments) or reported by the UE (in some embodiments).

Detailed designs for SD/FD bases including the associated Uplink Control Information (UCI) parameters may follow the legacy specification.

For the Type-II codebook refinement for high or medium velocities, the selection of DD basis vectors may be layer-specific. The number of selected DD basis vectors (denoted as Q) may be layer-common.

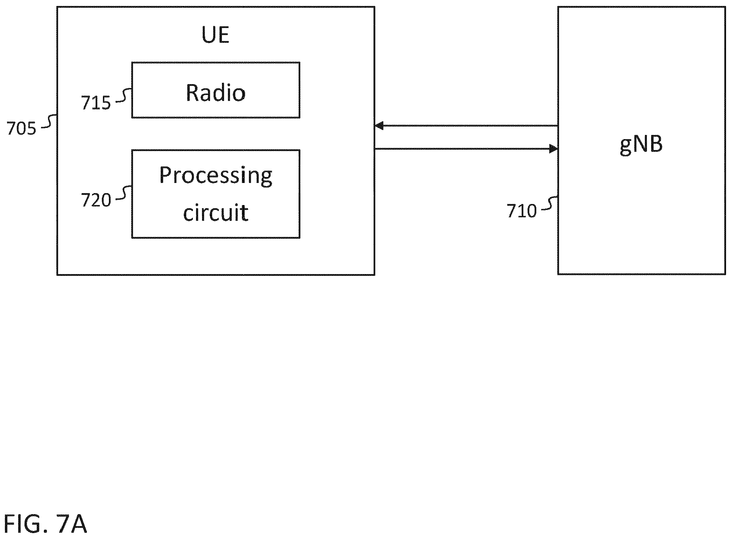

FIG. 7A shows a portion of a wireless system. A user equipment (UE) 705 sends transmissions to a network node (gNB) 710 and receives transmissions from the gNB 710. The UE includes a radio 715 and a processing circuit (or "processor") 720. In operation, the processing circuit may perform various methods described herein, e.g., it may receive (via the radio, as part of transmissions received from the gNB 710) information from the gNB 710, and it may send (via the radio, as part of transmissions transmitted to the gNB 710) information to the gNB 710.

In operation, the UE 705 may report, to the gNB 710 its capability to predict CSI, and it may also report, to the gNB 710 the greatest time in the future at which the UE is able to predict the CSI. To allow the gNB 710 to take advantage of predicted CSI, the UE 705 may transmit one or more precoding matrices to the gNB 710. The predicted CSI may be predicted for a future time, the future time being a set time interval after the transmitting of a legacy CSI. As used herein, a "legacy CSI" is a CSI that is an estimate of a current CSI (i.e., a CSI that is not predicted). In some embodiments, the predicted CSI is predicted for a future time, the future time being instead a set time interval after a time of receipt, by the UE 705, of a most recent CSI-RS.

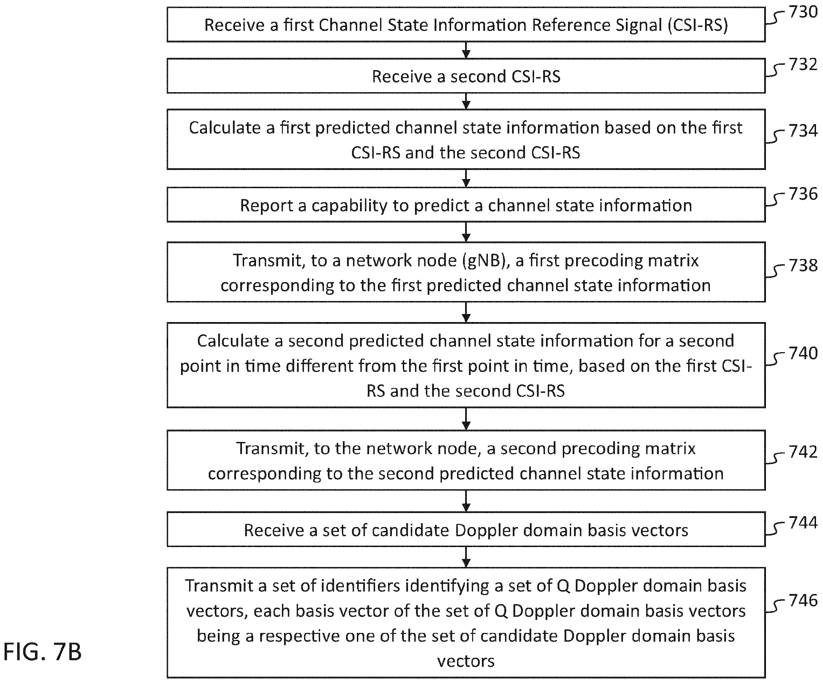

FIG. 7B is a flow chart of a method, in some embodiments. The method includes receiving, at 730, by a UE, a first Channel State Information Reference Signal (CSI-RS); receiving, at 732, by the UE, a second CSI-RS; and calculating, at 734, by the UE, a first predicted channel state information based on the first CSI-RS and the second CSI-RS. The method further includes reporting, at 736, by the UE, a capability to predict a channel state information; transmitting, at 738, to a network node (gNB), a first precoding matrix corresponding to the first predicted channel state information; calculating, at 740, by the UE, a second predicted channel state information for a second point in time, different from the first point in time, based on the first CSI-RS and the second CSI-RS; and transmitting, at 742, to the network node, a second precoding matrix corresponding to the second predicted channel state information. The method further includes receiving, at 744, by the UE, a set of candidate Doppler domain basis vectors; and transmitting, at 746, by the UE, a set of identifiers identifying a set of Q Doppler domain basis vectors, each basis vector of the set of Q Doppler domain basis vectors being a respective one of the set of candidate Doppler domain basis vectors.

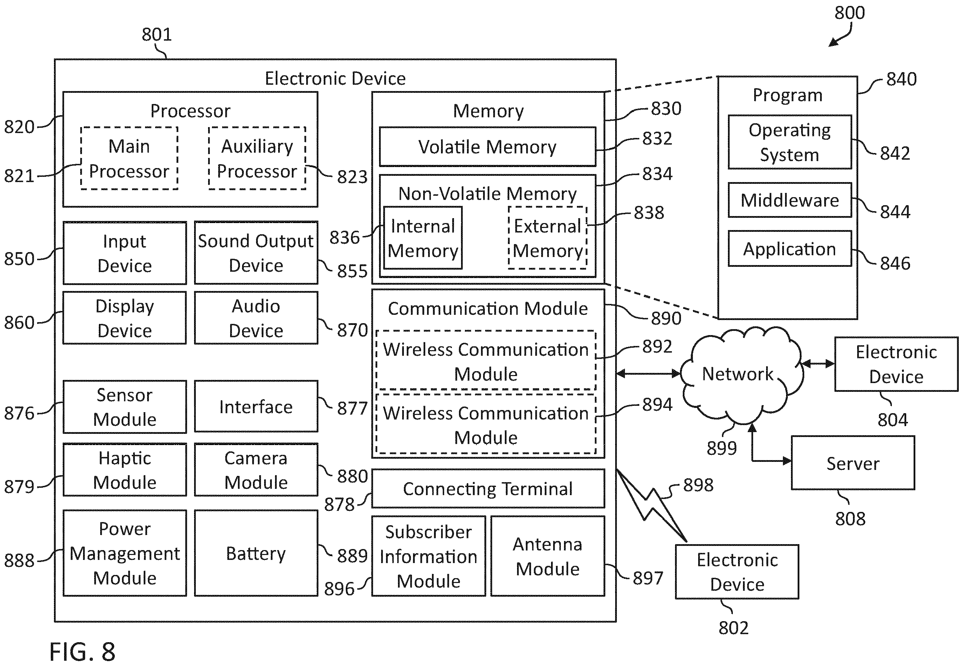

FIG. 8 is a block diagram of an electronic device (e.g., a UE 705) in a network environment 800, according to an embodiment. Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 840, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 894. In one embodiment, at least one (e.g., the display device 860 or the camera module 880) of the components may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g., a display).

The processor 820 may execute software (e.g., a program 840) to control at least one other component (e.g., a hardware or a software component) of the electronic device 801 coupled with the processor 820 and may perform various data processing or computations.

As at least part of the data processing or computations, the processor 820 may load a command or data received from another component (e.g., the sensor module 846 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high- definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BluetoothTM, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

Embodiments of the subj ect matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method, comprising:

   receiving, by a User Equipment, UE, a first Channel State Information Reference Signal, CSI-RS;
   receiving, by the UE, a second CSI-RS;
   calculating, by the UE, a first predicted channel state information based on the first CSI-RS and the second CSI-RS; and
   transmitting, to a network node, gNB, a first precoding matrix corresponding to the first predicted channel state information.

2. The method of claim 1, further comprising reporting, by the UE, a capability to predict a channel state information.

3. The method of claim 2, wherein the reporting comprises reporting a greatest time in the future at which the UE is able to predict the channel state information.

4. The method of any one of claims 1 to 3, wherein the first predicted channel state information is predicted for a first point in time, the first point in time being a set time interval after the transmitting of a legacy channel state information.

5. The method of any one of claims 1 to 3, wherein the first predicted channel state information is predicted for a first point in time, the first point in time being a set time interval after a time of receipt, by the UE, of a most recent CSI-RS.

6. The method of any one of claims 1 to 3, wherein the transmitting of the first precoding matrix comprises transmitting an array of coefficients, the first precoding matrix being a portion of an array product of the array of coefficients with a plurality of bases.

7. The method of claim 6, wherein:

   the first predicted channel state information is predicted for a first point in time; and
   the method further comprises:

      calculating, by the UE, a second predicted channel state information for a second point in time, different from the first point in time, based on the first CSI-RS and the second CSI-RS, and
      transmitting, to the network node, a second precoding matrix corresponding to the second predicted channel state information,

   the second precoding matrix and the first precoding matrix being transmitted in one CSI report.

8. The method of claim 7, wherein:

   the second precoding matrix is a portion of the array product of the array of coefficients with the plurality of bases; and
   the plurality of bases includes a single set of Doppler domain bases commonly selected for all spatial domain bases and for all frequency domain bases per layer.

9. The method of claim 8, wherein:

   the set of Doppler domain bases is a set of Q Doppler domain bases; and
   the method further comprises receiving a radio resource control, RRC, transmission, the RRC transmission specifying Q.

10. The method of claim 9, further comprising:

    receiving, by the UE, a plurality of candidate Doppler domain bases; and
    transmitting, by the UE, a set of identifiers identifying the set of Q Doppler domain bases, each basis of the set of Q Doppler domain bases being a respective one of the plurality of candidate Doppler domain bases.

11. A User Equipment, LTE, comprising:

one or more processors; and
a memory storing instructions which, when executed by the one or more processors, cause performance of:

receiving, by the UE, a first Channel State Information Reference Signal, CSI-RS;
receiving, by the UE, a second CSI-RS; and
calculating, by the UE, a first predicted channel state information based on the first CSI-RS and the second CSI-RS.

12. The UE of claim 11, wherein the instructions, when executed by the one or more processors, further cause performance of reporting, by the UE, a capability to predict a channel state information.

13. The UE of claim 12, wherein the reporting comprises reporting a greatest time in the future at which the UE is able to predict the channel state information.

14. The UE of claim 13, wherein the instructions, when executed by the one or more processors, further cause performance of transmitting, to a network node, gNB, a first precoding matrix corresponding to the first predicted channel state information.

15. The UE of claim 14, wherein the first predicted channel state information is predicted for a first point in time, the first point in time being a set time interval after the transmitting of a legacy channel state information.

Space

Rank

Frequency

$N_{tx}$

$W = W_1 W_2$

$N_{sb}$

FIG. 1A

$W$

precoding vectors

subbands

| $W(N_{tx}, 0)$ | | | | | | | $W(N_{tx}, N_{sb})$ |
|---|---|---|---|---|---|---|---|
| | | | | | | | |
| | | | | | | | |
| | | | | | | | |
| | | | | | | | |
| | | | | | | | |
| $W(1,0)$ | | | | | | | |
| $W(0,0)$ | $W(0,1)$ | | | | | | $W(0, N_{sb})$ |

FIG. 1B

FIG. 2A

FIG. 2B

| Parameter combination | $L$ | $p$ (for RI= 1-2) | $p$ (for RI= 3-4) | $\beta$ | Restriction (if any) |
|---|---|---|---|---|---|
| 1 | 2 | 1/4 | 1/8 | 1/4 | |
| 2 | 2 | 1/4 | 1/8 | 1/2 | |
| 3 | 4 | 1/4 | 1/8 | 1/4 | |
| 4 | 4 | 1/4 | 1/8 | 1/2 | |
| 5 | 4 | 1/4 | 1/4 | 3/4 | |
| 6 | 4 | 1/2 | 1/4 | 1/2 | |
| 7 | 6 | 1/4 | - | 1/2 | RI= 1-2, 32 ports |
| 8 | 6 | 1/4 | - | 3/4 | RI= 1-2, 32 ports |

FIG. 3

$$W_R(n) = [R_W(n,n); \ldots; R_W(n,n-N_{csi}+1)]_{N_{tx} \times N_{sb} \times N_{csi}}$$

FIG. 4A

$$W_R{}^{(n)} \quad R_W{}^{(n,n-N_{csi}+1)}$$

Space Time Frequency

$$N_{tx} \quad R_W{}^{(n,n)} \quad N_{sb} \quad N_{csi}$$

$$= N_{tx} \begin{bmatrix} b_0 \dots b_{L-1} & 0 \\ 0 & b_0 \dots b_{L-1} \end{bmatrix} \times 2L \quad \tilde{R}_W{}^{(n,n)} \quad \times \quad K \quad W_{freq}^{H}$$

$$W_1 \quad 2L \qquad \tilde{W}_R{}^{(n)} \quad \tilde{R}_W{}^{(n,n-N_{csi}+1)} \quad K \quad N_{csi} \qquad N_{sb}$$

FIG. 4B

$$A^{(n)} \quad \hat{a}(p)$$

Space Time Frequency

$$N_{tx} \quad \hat{a}(1) \quad N_{sb} \quad p$$

$$= N_{tx} \begin{bmatrix} b_0 \dots b_{L-1} & 0 \\ 0 & b_0 \dots b_{L-1} \end{bmatrix} \times 2L \quad \hat{\tilde{a}}(1) \quad \times \quad K \quad W_{freq}^{H}$$

$$W_1 \quad 2L \qquad \tilde{A}^{(n)} \quad \hat{\tilde{a}}(p) \quad K \quad p \qquad N_{sb}$$

FIG. 4C

$W_{Doppler} = [f_{d_0} \cdots f_{d_{M-1}}]$

FIG. 5A

FIG. 5C

$\tilde{W}_R^{(n)} / \tilde{A}^{(n)}$

$W$ reporting

$\tilde{W}_R^{(n)} / \tilde{A}^{(n)}$ reporting and $W$ reporting

FIG. 5B

CSI-RS reception and calculation

$\hat{W}_{compressed}$

CSI reporting of $\hat{W}_{compressed}$
(a compressed legacy CSI over $L$ time instances)

FIG. 6

FIG. 7A

```
┌─────────────────────────────────────────────────────────────┐
│   Receive a first Channel State Information Reference Signal  │ ⌐730
│                          (CSI-RS)                            │
└─────────────────────────────────────────────────────────────┘
                              │
                              ▼
┌─────────────────────────────────────────────────────────────┐
│                    Receive a second CSI-RS                    │ ⌐732
└─────────────────────────────────────────────────────────────┘
                              │
                              ▼
┌─────────────────────────────────────────────────────────────┐
│  Calculate a first predicted channel state information based  │ ⌐734
│              on the first CSI-RS and the second CSI-RS        │
└─────────────────────────────────────────────────────────────┘
                              │
                              ▼
┌─────────────────────────────────────────────────────────────┐
│      Report a capability to predict a channel state          │ ⌐736
│                       information                            │
└─────────────────────────────────────────────────────────────┘
                              │
                              ▼
┌─────────────────────────────────────────────────────────────┐
│   Transmit, to a network node (gNB), a first precoding matrix │ ⌐738
│   corresponding to the first predicted channel state          │
│                       information                            │
└─────────────────────────────────────────────────────────────┘
                              │
                              ▼
┌─────────────────────────────────────────────────────────────┐
│  Calculate a second predicted channel state information for a │ ⌐740
│  second point in time different from the first point in time, │
│          based on the first CSI-RS and the second CSI-RS      │
└─────────────────────────────────────────────────────────────┘
                              │
                              ▼
┌─────────────────────────────────────────────────────────────┐
│   Transmit, to the network node, a second precoding matrix    │ ⌐742
│   corresponding to the second predicted channel state         │
│                       information                            │
└─────────────────────────────────────────────────────────────┘
                              │
                              ▼
┌─────────────────────────────────────────────────────────────┐
│    Receive a set of candidate Doppler domain basis vectors    │ ⌐744
└─────────────────────────────────────────────────────────────┘
                              │
                              ▼
┌─────────────────────────────────────────────────────────────┐
│  Transmit a set of identifiers identifying a set of Q Doppler │ ⌐746
│  domain basis vectors, each basis vector of the set of Q      │
│  Doppler domain basis vectors being a respective one of the   │
│         set of candidate Doppler domain basis vectors         │
└─────────────────────────────────────────────────────────────┘
```

FIG. 7B

FIG. 8

EP 4 262 105 A1

Europäisches
Patentamt

European
Patent Office

Office européen
des brevets

# EUROPEAN SEARCH REPORT

Application Number

EP 23 16 4706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/351885 A1 (CHAVVA ASHOK KUMAR REDDY [IN] ET AL) 11 November 2021 (2021-11-11) | 1,4-8, 11,14,15 | INV. H04B7/06 G06N3/08 H04L5/00 |
| Y | * paragraphs [0033] - [0034], [0049] - [0050], [0091], [0175] - [0180]; figures 6, 13A, 13B * | 2,3,12, 13 | |
| A | | 9,10 | |
| | ----- | | |
| Y | US 2021/409086 A1 (YERRAMALLI SRINIVAS [US] ET AL) 30 December 2021 (2021-12-30) * paragraphs [0091], [0127] * | 2,3,12, 13 | |
| | ----- | | |

TECHNICAL FIELDS
SEARCHED      (IPC)

H04B
H04W
H04L
G06N

The present search report has been drawn up for all claims

| Place of search | Date of completion of the search | Examiner |
|---|---|---|
| Munich | 18 August 2023 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 4706

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2023

| Patent document cited in search report | | Publication date | Patent family member(s) | | Publication date |
|---|---|---|---|---|---|
| US 2021351885 | A1 | 11-11-2021 | US 2021351885 | A1 | 11-11-2021 |
| | | | WO 2020213964 | A1 | 22-10-2020 |
| US 2021409086 | A1 | 30-12-2021 | US 2021409086 | A1 | 30-12-2021 |
| | | | WO 2022005719 | A1 | 06-01-2022 |

EPO FORM P0459

For more details about this annex : see Official Journal of the European Patent Office, No. 12/82